# EUROPEAN PATENT SPECIFICATION

(11) **EP 3 205 937 B1**
(45) Date of publication and mention of the grant of the patent: **31.03.2021**
(21) Application number: 16154862.3
(22) Date of filing: 09.02.2016
(51) Int. Cl.: F23R 3/00, F23R 3/06

(54) **IMPINGEMENT COOLED WALL ARANGEMENT**
PRALLGEKÜHLTE WANDANORDNUNG
AGENCEMENT DE PAROI REFROIDIE PAR IMPACT

(43) Date of publication of application: 16.08.2017
(73) Proprietor: Ansaldo Energia IP UK Limited, London W1G 9DQ (GB)
(72) Inventor: Baumgartner, Felix Andreas, 5400 Baden (CH); Maurer, Michael Thomas, 5400 Baden (CH); Harrington, John Thomas, 5400 Baden (CH)
(74) Representative: Studio Torta S.p.A.

(56) References cited:
- WO-A2-2015/023339
- US-A- 4 064 300
- US-A1- 2013 333 388
- US-A1- 2014 238 030
- US-A1- 2015 361 889

## Description

### Technical field

The invention refers to an impingement cooling arrangement, more particularly to an impingement cooled wall arrangement for cooling a wall exposed to hot gases.

### Background of the invention

The thermodynamic efficiency of power generating cycles depends on the maximum temperature of its working fluid, which in the case for example of a gas turbine is the hot gas exiting the combustor. The maximum feasible temperature of the hot gas is limited by combustion emissions as well as by the operating temperature limit of the metal parts in contact with this hot gas, and on the ability to cool these parts below the hot gas temperature. The cooling of the hot gas duct walls forming the hot gas flow paths of advanced heavy duty gas turbines is difficult and currently known cooling methods carry high performance penalties, i.e. lead to a reduction in power and efficiency.

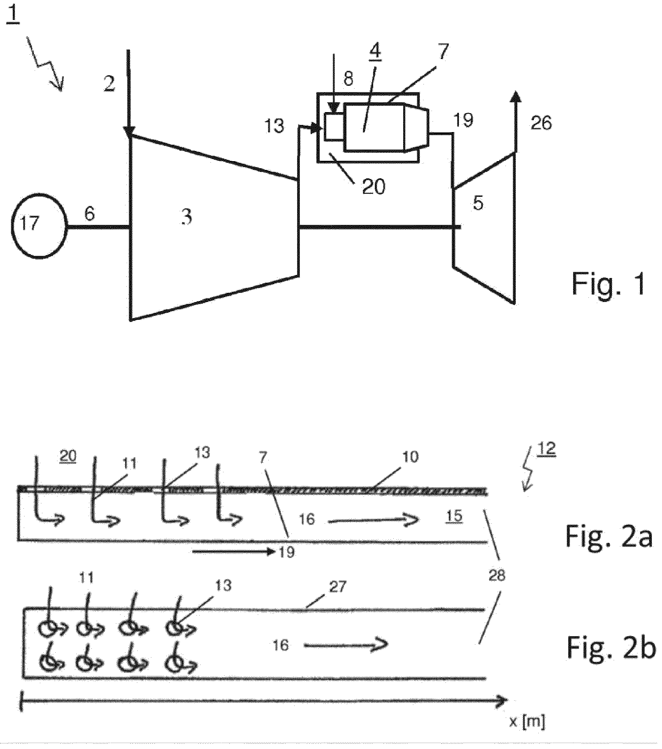

Impingement cooling is one of the most effective cooling techniques for components which are exposed to gases with high hot gas temperatures. For impingement cooling of a wall a sleeve is disposed a short distance away from the wall outer surface (the surface facing away from the hot gas). The impingement sleeve contains an array of holes through which compressed gas discharges to generate an array of air jets which impinge on and cool the outer surface of the wall. After impingement the compressed gas flows as cooling gas in a cooling path delimited by the wall and the impingement sleeve towards an end of cooling flow path. This flow leads to a so called cross flow. Usually the first Impingement rows allow impingement on the wall without any cross-flow in the cooling channel. As the number of subsequent impingement rows is increasing towards the end of the cooling flow path, the cross flow in the cooling channel bullds up. As a disadvantage, the increasing cross flow in the cooling channel hinders and lowers the possible heat transfer coefficients of the impingement cooling as the impingement jets are diverted and bent away from the wall (see Fig.2a) before they impinge on it.

To limit the cross flow velocity it has been suggested in the US4719748 to increase the height of the cooling channel over the length of the cooling channel. However, an Increase of the height of the cooling channel reduces the Impingement effect of the jet reaching the duct wall. Another solution in EP2955443 proposes adding additional impingement holes in combination with diverters.

In addition to the therefore decreasing efficiency of impingement cooling over the length of a wall cooled with impingement cooling the typical heat load of a duct wall is not homogeneous. For example, most combustion chambers of gas turbines show an Inclination with respect to the engine axis, which leads to a change in the hot gas flow direction. The hot gas flow In the combustion chamber has to adapt to this change in main flow direction leading to areas with higher heat load, so-called hot spots, on typical locations off the combustion chamber walls. To ensure the life time of the areas of the wall which are exposed to increased heat load as increased cooling is required at these locations.

US 4 064 300 A discloses an impingement cooled wall arrangement comprising: an upstream section and a downstream section, an impingement sleeve and a wall exposed to a hot gas during operation. The impingement sleeve is at least partly disposed in a plenum, and is spaced at a distance from the wall to form a cooling flow path between the wall and the impingement sleeve such that compressed gas injected from the plenum through the plurality of apertures in the impingement sleeve during operation Impinges on the wall and flows as a cross flow towards an exit at a downstream end of the cooling flow path. Turbulators area also provided with leading edges arranged on the wall. The center of at least one of the apertures Is aligned along the longitudinal axis with the leading edge of at least one of the turbulators. Other examples of known impingement cooled wall arrangements are disclosed in US 2014/238030 A1 and In WO 2015/023339 A2.

Taking in the consideration existing solution, there Is a still need for efficient impingement cooling arrangements.

### Summary of the invention

The main object of the present invention is to propose an impingement cooled wall arrangement which allows efficient impingement cooling of a wall independent of the position on the wall guiding a hot gas flow and to maintain a high cooling efficiency along the extension of a wall.

The disclosed impingement cooled wall arrangement according to invention comprises an upstream section and a downstream section; an impingement sleeve and a wall exposed to a hot gas during operation, wherein the impingement sleeve is at least partly disposed in a plenum, and spaced at a distance from the wall to form a cooling flow path between the wall and the impingement sleeve such that compressed gas injected from the plenum through the plurality of apertures In the cooling sleeve during operation impinges on the wall and flows as a cross flow towards an exit at a downstream end of the cooling flow path. The disclosed impingement cooled wall arrangement according to the invention comprises also a plurality of turbulators having a leading edge arranged on the wall. The center of at least one of the apertures Is aligned along the longitudinal axis with the leading edge of at least one of the turbulators. The apertures are arranged in the upstream section, the turbulators are arranged in the downstream section downstream of the apertures in the direction of the cross flow and the downstream section is only cooled by the cross flow.

According to one embodiment of the invention, the arrangement comprises at least one row of the apertures and at least one row of turbulators.

According to another embodiment of the Invention, the number of the apertures is equal or smaller to the number of the turbulators.

According to yet another embodiment, each of the apertures is aligned with at least one of the turbulators.

According to another embodiment of the invention, all the turbulators have similar shape.

According to yet another embodiment of the invention, at least two of the turbulators are connected to each other,

According to another preferred embodiment of the invention, at least one of the turbulators has a V-shape, pyramid shape or shape of semi-circle.

According to the invention, the turbulators are arranged downstream of the apertures in the direction of the cross flow.

Apart from impingement cooled wall arrangement, the disclosure describes also a combustor and gas turbine which comprises an Impingement cooled wall arrangement according to one of the embodiments of the invention described above.

### Brief description of the drawings

The invention, Its nature as well as its advantages, shall be described in more detail below with the aid of the accompanying drawings. Referring to the drawings:
Fig.1 shows a gas turbine with a compressor, a combustion arrangement, and a turbine;
Fig. 2a, 2b shows an impingement cooled wall arrangement;
Fig. 3 shows schematically impingement flows in the wall arrangement;
Fig.4 shows a top view of the impingement cooled wall arrangement with apertures and turbulators;
Fig. 5 shows schematically the impingement cooled wall arrangement with apertures and turbulators;
Fig. 6 shows the development of the resulting heat transfer coefficient over the length of a conventional impingement cooled wall and an impingement cooled wall with turbulators.

### Embodiments of the invention

The same or functionally identical elements are provided with the same designations below. The examples do not constitute any restriction of the invention to such arrangements.

Fig. 1 shows a gas turbine 1 with an impingement cooled combustor 4. The gas turbine 1 comprises a compressor 3, a combustor 4, and a turbine 5. Intake air 2 is compressed to compressed gas 11 by the compressor 3 and feed to the combustor via a plenum 20 to the combustor 4. Fuel 8 is burned with the compressed gas in the combustor 4 to generate a hot gas flow 19. The hot gas is expended in the turbine 5 generating mechanical work. Typically, the gas turbine system includes a generator 17 which is coupled to a shaft 6 of the gas turbine 1. The gas turbine 1 further comprises a cooling system for the turbine 5 and the combustor 4, which is not shown, as it is not the subject of this invention. Exhaust gases 26 leave the turbine 5. The remaining heat is typically used in a subsequent water steam cycle, which is also not shown here.

Fig. 2a shows a cut through an impingement cooled wall arrangement 12 and Fig. 2b shows a top view of the impingement cooled wall arrangement 12 of Fig 2a. As shown the impingement cooled wall arrangement 12 comprises a wall 7 which is exposed to a hot gas flow 19 on one side. A cooling sleeve 10 comprising apertures 14 for impingement cooling of the wall 7 is arranged at a distance above the wall 7. Compressed gas 11 is feed from the plenum 20 through apertures 13 and impinges on the wall 7. After the compressed gas 11 impinges on the wall 7 it flows as a cross flow 16 in the cooling flow path 15 formed by the wall 7 and the sleeve 10 towards the downstream end 28 of the cooling flow path 15. In the example of Fig. 2a the hot gas flow 19 and cross flow 16 flow in the same direction parallel to each other towards the downstream end 28 of the cooling flow path 15. Fig. 2b shows a top view of the arrangement of Fig. 2a. The impingement cooled wall arrangement 12 is delimited to an upstream end and to both sides by a cooling field wall 27. Two rows of apertures 13 are arranged in parallel. The compressed gas 11 flows through the apertures 13 to form a cross flow 16.

In the example shown in Fig. 2a, 2b apertures for compressed gas injection on the wall 7 are arranged in an upstream section of the impingement cooled wall arrangement 12. The downstream section is only cooled by the cross flow 16. The length x of the cooling flow path starting from the upstream end is indicated below the Fig. 2b.

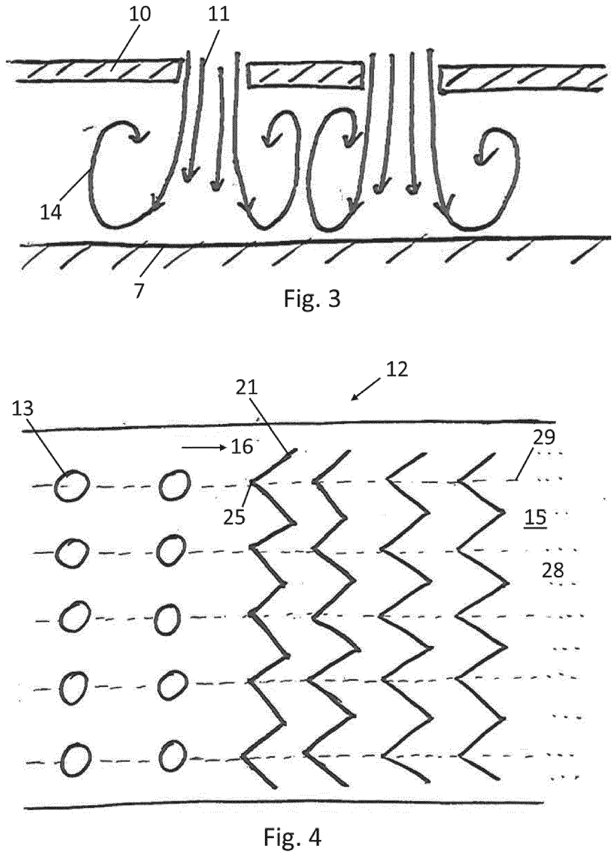

Fig.3 shows impingement of the compressed gas flows 11 on the wall 7. After impingement, the secondary flows 14 are created.

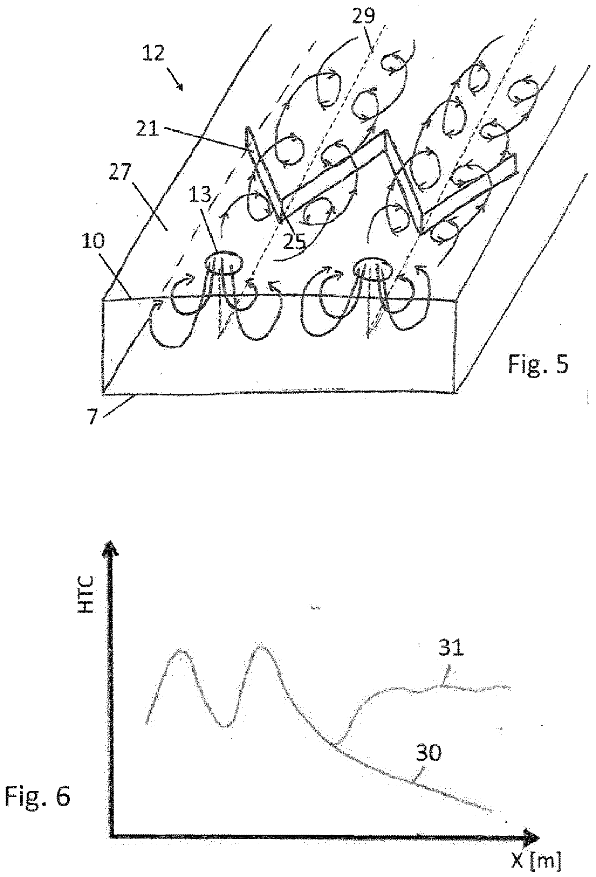

A first example of an impingement cooled wall arrangement 12 according to the invention is shown in Fig. 4 (which shows top view) and Fig. 5. The flow distribution immediately downstream of impingement apertures 13 is highly non-uniform with high momentum cores in alignment with the apertures 13. In Fig. 4, there are two rows of the apertures 13, and four rows of turbulators 21. The turbulators 21 have V-shape having a leading edge 25. The cross flow 16 is diverted by the turbulators 21, creating opposing vertices as shown in Fig. 5. According to the invention, the apertures 13 are aligned along the longitudinal axis 29 with the leading edge 25 of the turbulators 21. By aligning the turbulators 21 with the apertures 13, the design takes advantage of the high momentum cores produced by the apertures 13 in the downstream region, thereby increasing the heat transfer levels produced by these features. This design allows for more uniform heat transfer on the part, thereby increasing part life, as well as significantly reducing the required coolant mass flow by the removal of the downstream impingement apertures, reducing the amount of forfeited compressor work. Fig. 4 and Fig. 5 shows how the problem of reducing the mass flow and pressure drop requirements of the cooled part, while maintaining the high heat transfer produced by the upstream impingement rows, is solved eliminating the downstream rows from where the heat transfer is seen to decrease and instead place turbulators 21 aligned with the apertures 13. Alignment of the impingement apertures with the leading edges 25 is increasing the overall heat transfer level at the same pressure drop of the cooling system or vice versa. For non-casted parts there is a decrease in manufacturing costs due to a potential reduction of the number of turbulators.

The turbulators 21 can be connected to each other as shown in Fig. 4 and Fig.5, or they may be separated (not shown). In addition, the turbulators 21 may have different shapes which can produce two opposing vertices. Such a shape includes pyramidal and semi-circle shapes.

Fig. 6 shows the illustration (not real data) of the development the resulting heat transfer coefficient (HTC) 30 over the length of the impingement cooled wall of Fig. 2a/2b and the heat transfer coefficient 31 of the impingement cooled wall with turbulators 21 of Fig. 4 and Fig. 5. The local peaks in cooling due to impingement of the compressed gas introduced through the apertures 13 on the wall 7 are clearly indicated. For the arrangement of Fig. 2a/2b without the turbulators 21 the peaks and overall heat transfer coefficient (HTC) is reduced along the length x of the cooling flow path 15. The resulting heat transfer coefficient over the length of the impingement cooled wall is an average heat transfer coefficient over the width of the cooled wall section. The peaks are reduced due to the cross flow 16 over the length x. For the arrangement with the turbulators 21 the heat transfer coefficient 31 is significantly improved.

The impingement cooled wall arrangement shown in embodiments of the invention can be used for example in a gas turbine with can combustors. The can combustors are typically circumferentially distributed around the shaft 6 of the gas turbine and have a transition piece or transition section for the transition from a circular cross section of the combustion chamber to a cross section with a shape of a section of an annulus or practically rectangular flow cross section at the outlet, i.e. at the turbine inlet. The transition piece can be integrated into the duct or be a separate duct and the disclosed impingement cooled wall arrangement can equally be used for the duct guiding the hot gases in the transition piece.

The disclosed impingement cooled wall arrangement and method for cooling can be used in gas turbines as well as in other machines or plants in which a wall is exposed to hot gas such as for example a furnace or a reactor.

It should be apparent that the foregoing relates only to the preferred embodiments of the present invention and that numerous changes and modifications may be made herein by one of ordinary skill in the art without departing from the scope of the invention as defined by the following claims.

### List of designations

- 1: Gas turbine
- 2: Intake air
- 3: Compressor
- 4: Combustor
- 5: Turbine
- 6: Shaft
- 7: Duct wall
- 8: Fuel
- 9: Burner
- 10: Sleeve
- 11: Compressed gas
- 12: Impingement cooled wall arrangement
- 13: Aperture
- 14: Secondary flow
- 15: Cooling flow path
- 16: Cross flow
- 17: Generator
- 19: Hot gas flow
- 20: Compressed gas plenum
- 21: Turbulator
- 25: Leading edge
- 26: Exhaust gas
- 27: Cooling field wall
- 28: Downstream end
- 29: Longitudinal axis
- 30: HTC without turbulators
- 31: HTC with turbulators

## Claims

1. An impingement cooled wall arrangement (12) comprising:
an upstream section and a downstream section; an impingement sleeve (10) and a wall (7) exposed to a hot gas (19) during operation, wherein the impingement sleeve (10) is at least partly disposed in a plenum (20), and spaced at a distance from the wall (7) to form a cooling flow path (15) between the wall (7) and the Impingement sleeve (10) such that compressed gas (11) injected from the plenum (20) through a plurality of apertures (13) in the impingement sleeve (10) during operation impinges on the wall (7) and flows as a cross flow (16) towards an exit at a downstream end (28) of the cooling flow path (15); and a plurality of turbulators (21) having a leading edge (25) arranged on the wall (7),
wherein the center of at least one of the apertures (13) is aligned along a longitudinal axis (29) with the leading edge (25) of at least one of the turbulators (21);
**characterised in that** the apertures (13) are arranged in the upstream section, the turbulators (21) are arranged in the downstream section downstream of the apertures (13) in the direction of the cross flow (16) and the downstream section Is only cooled by the cross flow (16).

2. The impingement cooled wall arrangement (12) according to claim 1, wherein the arrangement (12) comprises at least one row of the apertures (13) and at least one row of the turbulators (21).

3. The Impingement cooled wall arrangement (12) according to claim 1 or 2, wherein the number of the apertures (13) is equal or smaller than the number of the turbulators (21).

4. The impingement cooled wall arrangement (12) according to any of the preceding claims, wherein each of the apertures (13) is aligned along the longitudinal axis (29) with at least one of the turbulators (21).

5. The impingement cooled wall arrangement (12) according to any one of the preceding claims, wherein all the turbulators (21) have similar shape.

6. The Impingement cooled wall arrangement (12) according to any one of the preceding claims, wherein at least two of the turbulators (21) are connected to each other.

7. The impingement cooled wall arrangement (12) according to any of the preceding claims, wherein at least one of the turbulators (21) has a V-shape.

8. The impingement cooled wall arrangement (12) according to any of the claims 1 to 6, wherein at least one of the turbulators (21) has a pyramid shape.

9. The impingement cooled wall arrangement (12) according to any of the claims 1 to 6, wherein at least one of the turbulators (21) has a shape of semi-circle.

10. A combustor (4) **characterized in that** It comprises an impingement cooled wall arrangement (12) according to anyone of the preceding claims.

11. A gas turbine (1) **characterized in that** it comprises an Impingement cooled wall arrangement (12) according to any one of the preceding claims.

## Patentansprüche

1. Prallgekühlte Wandanordnung (12), enthaltend:
einen stromaufwärts liegenden Abschnitt und einen stromabwärts liegenden Abschnitt; eine Prallhülse (10) und eine Wand (7), die während des Betriebs einem Heißgas (19) ausgesetzt ist, wobei die Prallhülse (10) zumindest teilweise in einer Luftkammer (20) angeordnet ist und in einem Abstand von der Wand (7) liegt, um einen Kühlungsstromweg (15) zwischen der Wand (7) und der Prallhülse (10) zu bilden, sodass aus der Luftkammer (20) durch eine Vielzahl von Öffnungen (13) in der Prallhülse (10) während des Betriebs eingespritztes komprimiertes Gas (11) auf die Wand (7) prallt und als ein Querstrom (16) zu einem Ausgang an einem stromabwärts liegenden Ende (28) des Kühlungsstromwegs (15) fließt; und eine Vielzahl von Turbulatoren (21), die eine an der Wand (7) angeordnete Vorderkante (25) haben,
wobei die Mitte mindestens einer der Öffnungen (13) entlang einer Längsachse mit der Vorderkante (25) mindestens eines der Turbulatoren (21) ausgerichtet ist;
**dadurch gekennzeichnet, dass** die Öffnungen (13) in dem stromaufwärts liegenden Abschnitt angeordnet sind, die Turbulatoren (21) in dem stromabwärts liegenden Abschnitt stromabwärts der Öffnungen (13) in Richtung des Querstroms (16) angeordnet sind und der stromabwärts liegende Abschnitt nur durch den Querstrom (16) gekühlt wird.

2. Prallgekühlte Wandanordnung (12) nach Anspruch 1, wobei die Anordnung (12) mindestens eine Reihe der Öffnungen (13) und mindestens eine Reihe der Turbulatoren (21) aufweist.

3. Prallgekühlte Wandanordnung (12) nach Anspruch 1 oder 2, wobei die Anzahl der Öffnungen (13) gleich der oder kleiner als die Anzahl der Turbulatoren (21) ist.

4. Prallgekühlte Wandanordnung (12) nach einem der vorhergehenden Ansprüche, wobei jede der Öffnungen (13) entlang der Längsachse (29) mit mindestens einem der Turbulatoren (21) ausgerichtet ist.

5. Prallgekühlte Wandanordnung (12) nach einem der vorhergehenden Ansprüche, wobei alle Turbulatoren (21) eine ähnliche Form haben.

6. Prallgekühlte Wandanordnung (12) nach einem der vorhergehenden Ansprüche, wobei mindestens zwei der Turbulatoren (21) miteinander verbunden sind.

7. Prallgekühlte Wandanordnung (12) nach einem der vorhergehenden Ansprüche, wobei mindestens einer der Turbulatoren (21) eine V-Form hat.

8. Prallgekühlte Wandanordnung (12) nach einem der Ansprüche 1 bis 6, wobei mindestens einer der Turbulatoren (21) eine Pyramidenform hat.

9. Prallgekühlte Wandanordnung (12) nach einem der Ansprüche 1 bis 6, wobei mindestens einer der Turbulatoren (21) die Form eines Halbkreises hat.

10. Brennkammer (4), **dadurch gekennzeichnet, dass** sie eine prallgekühlte Wandanordnung (12) nach einem der vorhergehenden Ansprüche aufweist.

11. Gasturbine (1), **dadurch gekennzeichnet, dass** sie eine prallgekühlte Wandanordnung (12) nach einem der vorhergehenden Ansprüche aufweist.

## Revendications

1. Agencement de paroi refroidie par impact (12) comprenant :
une section amont et une section aval ;
un manchon d'impact (10) et une paroi (7) exposée à un gaz chaud (19) lors du fonctionnement,
dans lequel le manchon d'impact (10) est disposé au moins en partie dans une chambre (20), et est espacé de la paroi (7) d'une distance, afin de former un chemin de flux de refroidissement (15) entre la paroi (7) et le manchon d'impact (10), de telle sorte que le gaz comprimé (11) injecté à partir de la chambre (20) à travers une pluralité d'ouvertures (13) dans le manchon d'impact (10) lors du fonctionnement, impacte la paroi (7) et circule en tant que flux transversal (16) vers une sortie au niveau d'une extrémité aval (28) du chemin de flux de refroidissement (15) ; et
une pluralité de générateurs de tourbillons (21) présentant un bord d'attaque (25), agencés sur la paroi (7),
dans lequel le centre d'au moins l'une des ouvertures (13) est aligné le long d'un axe longitudinal (29) avec le bord d'attaque (25) de l'un au moins des générateurs de tourbillons (21) ;
**caractérisé en ce que** les ouvertures (13) sont agencées dans la section amont, les générateurs de tourbillons (21) sont agencés dans la section aval, en aval des ouvertures (13) dans la direction du flux transversal (16), et la section aval est seulement refroidie par le flux transversal (16).

2. Agencement de paroi refroidie par impact (12) selon la revendication 1, dans lequel l'agencement (12) comprend au moins une rangée des ouvertures (13), et au moins une rangée des générateurs de tourbillons (21).

3. Agencement de paroi refroidie par impact (12) selon la revendication 1 ou 2, dans lequel le nombre d'ouvertures (13) est égal ou inférieur au nombre de générateurs de tourbillons (21).

4. Agencement de paroi refroidie par impact (12) selon l'une quelconque des revendications précédentes, dans lequel chacune des ouvertures (13) est alignée le long de l'axe longitudinal (29) avec l'un au moins des générateurs de tourbillons (21).

5. Agencement de paroi refroidie par impact (12) selon l'une quelconque des revendications précédentes, dans lequel tous les générateurs de tourbillons (21) présentent une forme similaire.

6. Agencement de paroi refroidie par impact (12) selon l'une quelconque des revendications précédentes, dans lequel deux au moins des générateurs de tourbillons (21) sont connectés l'un à l'autre.

7. Agencement de paroi refroidie par impact (12) selon l'une quelconque des revendications précédentes, dans lequel l'un au moins des générateurs de tourbillons (21) présente une forme en V.

8. Agencement de paroi refroidie par impact (12) selon l'une quelconque des revendications 1 à 6, dans lequel au moins l'un des générateurs de tourbillons (21) présente une forme pyramidale.

9. Agencement de paroi refroidie par impact (12) selon l'une quelconque des revendications 1 à 6, dans lequel au moins l'un des générateurs de tourbillons (21) présente une forme de demi-cercle.

10. Chambre de combustion (4), **caractérisée en ce qu'**elle comprend un agencement de paroi refroidie par impact (12) selon l'une quelconque des revendications précédentes.

11. Turbine à gaz (1), **caractérisée en ce qu'**elle comprend un agencement de paroi refroidie par impact (12) selon l'une quelconque des revendications précédentes.
